# EUROPÄISCHE PATENTSCHRIFT

(11) **EP 1 243 063 B1**
(45) Veröffentlichungstag und Bekanntmachung des Hinweises auf die Patenterteilung: **01.03.2006**
(21) Anmeldenummer: 00982812.0
(22) Anmeldetag: 21.12.2000
(51) Int. Cl.: H02K 15/10, H02K 15/12

(54) **VERFAHREN ZUR HERSTELLUNG EINER HOCHWERTIGEN ISOLIERUNG VON ELEKTRISCHEN LEITERN ODER LEITERBÜNDELN ROTIERENDER ELEKTRISCHER MASCHINEN MITTELS SPRÜHSINTERN**
METHOD FOR PRODUCING A HIGH-QUALITY INSULATION OF ELECTRIC CONDUCTORS OR CONDUCTOR BUNDLES OF ROTATING ELECTRICAL MACHINES USING SPRAY SINTERING
PROCEDE DE FABRICATION D'UNE ISOLATION DE QUALITE DE CONDUCTEURS ELECTRIQUES OU DE FAISCEAUX DE CONDUCTEURS DE MACHINES ELECTRIQUES ROTATIVES PAR FRITTAGE PAR PULVERISATION

(30) Priorität: 28.12.1999 DE 19963491
(43) Veröffentlichungstag der Anmeldung: 25.09.2002
(73) Patentinhaber: Alstom Technology Ltd, 5400 Baden (CH)
(72) Erfinder: BAUMANN, Thomas, CH-5430 Wettingen (CH); NIENBURG, Johann, 69121 Heidelberg (DE); SOPKA, Jörg, 68723 Schwetzingen (DE)
(86) Internationale Anmeldenummer: PCT/CH2000/000680
(87) Internationale Veröffentlichungsnummer: WO 2001/048895

(56) Entgegenhaltungen:
- EP-A- 0 321 223
- US-A- 3 747 853
- US-A- 5 316 801
- PATENT ABSTRACTS OF JAPAN vol. 1999, no. 03, 31. März 1999 (1999-03-31) & JP 10 314658 A (SANKYO SEIKI MFG CO LTD), 2. Dezember 1998 (1998-12-02)
- PATENT ABSTRACTS OF JAPAN vol. 004, no. 121 (E-023), 27. August 1980 (1980-08-27) & JP 55 074345 A (NIPPON DENSO CO LTD), 4. Juni 1980 (1980-06-04)
- PATENT ABSTRACTS OF JAPAN vol. 014, no. 045 (E-0880), 26. Januar 1990 (1990-01-26) & JP 01 274648 A (HITACHI LTD), 2. November 1989 (1989-11-02)

## Beschreibung

### Technisches Gebiet

Die Erfindung bezieht sich auf das Gebiet der Isolierung von rotierenden elektrischen Maschinen. Insbesondere betrifft die Erfindung ein Verfahren zur Herstellung einer hochwertigen Isolierung von Leitern oder Leiterbündeln, wie sie bei rotierenden Maschinen z.B. in Form von Statorspulen, Roebelstäben und Erregerleitern Verwendung finden.

### Stand der Technik

Herkömmlich werden auf dem Gebiet der Isolierung von Leitern oder Leiterbündeln von rotierenden elektrischen Maschinen verschiedene Verfahren verwendet.

Bei einem Verfahren werden Bänder bestehend aus einem Glasfaserträger und Glimmerpapier auf einen Statorleiter lagenförmig spiralig aufgewickelt, bis eine gewünschte Isolierdicke erreicht ist. Durch eine anschliessende Imprägnierung in Epoxyharz wird verbleibende Luft aus dem so entstandenen Isolierwickel verdrängt und die Bandlagen werden verklebt. Durch Aushärtung in einer geeigneten Form erhält die Isolierung ihre Endform. Herstellungsbedingt sind die Glimmerplättchen bei diesem Verfahren in Bandrichtung ausgerichtet, so dass daraus in der fertigen Isolierung eine Ausrichtung der Glimmerplättchen parallel zur Leiteroberfläche resultiert. Bei der sogenannten "Resin rich"-Technik ist dem Band Epoxyharz im B-Zustand beigemischt, welches durch Heisspressen des Stabes verfestigt wird.

Gemäss eines weiteren aus der EP 0 660 336 A2 bekannten Verfahrens werden Statorleiter mit Bändern bestehend aus thermoplastischem Kunststoff, gefüllt mit Glimmer, bewickelt. Eine Verfestigung und Formung erfolgt hier durch Heisspressen des bewickelten Statorleiters, wobei es zu Luftverdrängung, Aufschmelzen des Thermoplastes und Verklebung der Wickellagen kommt. Auch bei diesem Verfahren sind die Glimmerplättchen parallel zur Leiteroberfläche ausgerichtet. Bei keinem der Verfahren erfolgt jedoch ein vollständiges Auspressen der Luft. Es bleiben luftgefüllte Spalten und Löcher übrig, in denen es bei Spannungsbelastung zu Teilentladungen im Bereich von nC und darüber kommt.

Schliesslich kann eine Isolierung des Statorleiters auch durch eine Extrusion mit Thermoplasten ohne Füllstoffe, d.h. auch ohne Glimmer, wie im US-Patent Nr. 5 650 031 beschrieben, erfolgen.

Nunmehr sind die zu isolierenden Leiter von rotierenden elektrischen Maschinen jedoch meist recht komplex geformte Gebilde in der Form von Stäben oder Spulen. Ein gerader Teil der Leiter befindet sich in den Nuten des Stators der Maschine. Dabei bildet ein gebogener Teil der Leiter nach entsprechender Verbindung mit benachbarten Stäben und Spulen einen Wickelkopf, der an beiden Enden aus dem Stator herausragt. Die Länge des geraden Teils kann hierbei bei grossen rotierenden Maschinen 6m überschreiten. Problematisch ist bisher, dass Isolierung und Leiter üblicherweise unterschiedliche thermische Ausdehnungskoeffizienten α aufweisen, die im Laufe der Zeit aufgrund von thermischen Spannungen zu Fehlstellen in der Isolierung durch Ablösungen der Isolierung entstehende Hohlräume führen können, und dass bei der Herstellung der Isolierung Fehlstellen, beispielsweise Lufteinschlüsse, entstehen. An derartigen Fehlstellen kann es zu Teilentladungen kommen, die zu einer Schädigung der Isolierung führen. Auch hierbei sind Teilentladungsaktivitäten im 100 nC-Bereich durchaus üblich.

Ein sicherer Betrieb der Maschinenisolierung ist angesichts dieser Teilentladungsaktivitäten bisher nur durch die Barrierewirkung von senkrecht zur Feldrichtung orientieren Glimmerplättchen möglich. Dadurch wird eine Ausbildung von Durchschlagskanälen aus den Hohlräumen heraus verhindert. Als Obergrenze der dauerhaft zulässigen Betriebsfeldstärke wird dabei allgemein 2,5 bis 2,75 kV/mm angesehen. Ein derartiger Maximalwert wird jedoch von anderen Isoliersystemen der Mittel- bzw. Hochspannungsisolierung zum Teil deutlich übertroffen.

So beträgt beispielsweise das Maximalfeld für einen Dauerbetrieb in Stützisolatoren, bei denen ein Aluminiumoxid-gefülltes Epoxydharz für gasisolierte Schaltungen verwendet wird, 4 kV/mm und dasjenige für Hochspannungskabel, bei denen Polyäthylen verwendet wird, ca. 12 kV/mm. Diesen herkömmlichen Isoliersystemen ist gemeinsam, dass sie unter Betriebsbelastung keine Teilentladung entwickeln.

Da die derzeit verwendeten herkömmlichen Verfahren und Materialien unter Verwendung von Glimmer zu den im wesentlichen jedoch bereits mehr als 30 Jahre alt ist, sind durch eine Weiterentwicklung dieses Standes der Technik höchstens inkrementelle Verbesserungen zu erwarten. Daher erscheint es kaum möglich, durch Weiterentwicklungen dieses Standes der Technik eine höherwertige Isolierung zu entwickeln, die mit niedrigeren Durchlaufzeiten und geringeren Fertigungskosten im Vergleich zum Stand der Technik, sowie umweltschonend, d.h. ohne Lösungsmittel, ohne Emissionen und ohne eine Erzeugung von Sondermüll hergestellt werden kann und keine Fehlstellen enthält bzw. bei Fehlstellen zu keinen Teilentladungen führen.

### Darstellung der Erfindung

Daher ist es Aufgabe der vorliegenden Erfindung, ein Verfahren zur Herstellung einer hochwertigen Isolierung von Leitern oder Leiterbündeln zu schaffen, bei dem die Isolierung eine hohe Qualität aufweist und mit geringen Durchlaufzeiten und geringen Fertigungskosten sowie umweltschonend herstellbar ist.

Enfindungsgemäss wird diese Aufgabe durch das Verfahren zur Herstellung einer hochwertigen Isolierung von Leitern oder Leiterbündeln mit den Merkmalen des Patentanspruchs 1 gelöst. In den Unteransprüchen sind vorteilhafte Weiterbildungen der Erfindung angegeben.

Durch dieses erfindungsgemässe Verfahren zur Herstellung einer hochwertigen Isolierung von Leitern oder Leiterbündeln ohne Hohlräume, die unter Prüf- und Betriebsbelastungen zur Teilentladungen führen können, werden die ausgerichteten Glimmerplättchen nicht mehr benötigt. Dadurch wird sowohl die Wahl der Herstellungsverfahren als auch die Wahl der Materialien für die Isolierung sehr erleichtert, da das Einarbeiten von Glimmer in Konzentrationen von mehr als 40 Gewichtsprozent bei vielen Polymeren problematisch ist.

### Kurze Beschreibung der Zeichnung

Nachfolgend wird die Erfindung anhand eines in der Zeichnung dargestellten bevorzugten Ausführungsbeispiels näher erläutert. Es zeigen:
Fig. 1 eine Aufbau der erfindungsgemässen Sprühsintereinrichtung und

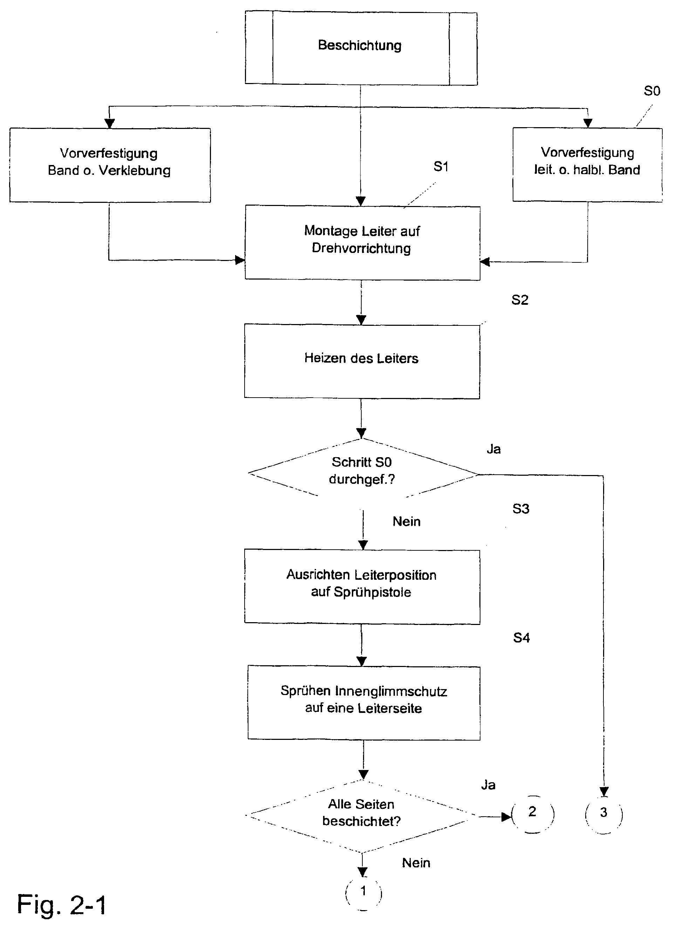

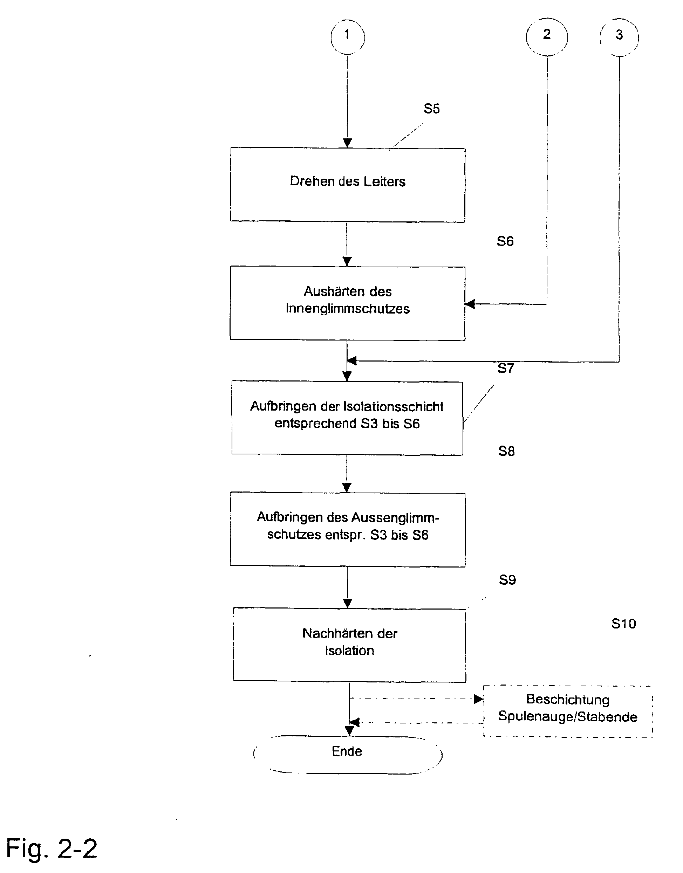

Fig. 2 (Fig. 2-1 und Fig. 2-2) ein Ablaufdiagramm, das die Durchführung des erfindungsgemässen Verfahrens veranschaulicht.

### Weg(e) zur Ausführung der Erfindung

Im folgenden wird nun ein Verfahren zur Herstellung einer hochwertigen Isolierung für Leiter oder Leiterbündel beispielsweise von rotierenden elektrischen Maschinen ausführlich beschrieben. Zuerst wird dabei auf den grundsätzlichen Aufbau der Isolierung eingegangen und anschliessend das erfindungsgemässe Verfahren genau erläutert.

Die mit dem erfindungsgemässen Verfahren aufgebrachte Isolierung besteht aus drei Schichten. Die erste Schicht bildet einen Innenglimmschutz, bestehend aus leitfähig oder halbleitfähig gefülltem Polymer. Hierbei wird ein Polymer verwendet, das sich gut mit dem Polymerwerkstoff der darüber folgenden Isolierschicht verbindet. Vorzugsweise wird dasselbe Polymer verwendet, wie in der Isolierschicht.

Der Innenglimmschutz hat - wie bei Hochspannungskabeln - die Aufgabe, elektrische und mechanische Grenzschichten zu entkoppeln. Elektrisch weist der Innenglimmschutz dasselbe Potential wie der darunterliegende metallische Leiter auf, ist also Teil des elektrischen Leiters; mechanisch ist er hingegen Teil der Isolierung. Dadurch ist gewährleistet, dass etwaige Ablösungen zwischen lsolierhülse und Leiter teilentladungsfrei sind, da über die Ablösung keine Spannung abfällt.

Das erfindungsgemässe Verfahren zur Herstellung dieser hochwertigen Isolierung für Leiter oder Leiterbündel soll die folgenden Anforderungen erfüllen:
1) Das Herstellungsverfahren soll weitgehend unabhängig von der jeweiligen Geometrie des Grünstabes bzw. der Grünspule, d.h. des verroebelten, nichtisolierten, verfestigten Stabes oder der Spule, sein.
2) Dabei soll die Isolierung hochwertig sein, d.h. gegenüber dem Stand der Technik eine bessere thermische Festigkeit bis ca. Tₘₐₓ = 180°C aufweisen und einen Dauerbetrieb von ca. 5 kV/mm auf den Flachseiten der Leiter schadlos überstehen.
3) Darüber hinaus soll das Verfahren die Herstellung einer Isolierung konstanter Dicke mit einer Toleranz Δd/d < 10% - auch wenn die Toleranzen des Grünstabes bzw. der Grünspule deutlich grösser sind - ermöglichen, wobei Schichtdicken von 0,3 bis 7 mm herstellbar sein sollen.
4) Zur Verkürzung der Herstellungszeit soll die Durchlaufzeit pro Stab bzw. Spule maximal 1 bis 2 Stunden betragen.

Aufgrund dieser durch das erfindungsgemässe Verfahren zu erfüllenden Anforderungen könnte man erwägen, herkömmliche Sprühsinter-Verfahren als Ausgangspunkt zu verwenden.

Ein derartiges herkömmliches Sprühsinter-Verfahren ist beispielsweise im deutschen Patent DE 39 36 431 mit dem Titel "Verfahren zum Aufbringen einer Kunststoffschicht auf einen metallischen Leiter" beschrieben. Bei diesem herkömmlichen Verfahren wird zum Aufbringen einer Kunststoffschicht auf einen metallischen Leiter Kunststoffpulver elektrostatisch aufgeladen, auf den vorgewärmten metallischen Leiter abgeschieden und dort zum Schmelzen gebracht. Das Verfahren wird für die Herstellung von Teilleiterisolierungen, d.h. Isolierungen mit geringer Spannungsbeanspruchung angewendet. Dieses herkömmliche Sprühsinter-Verfahren würde einen wesentlich geringeren Aufwand an Fertigungstechnologie als das herkömmliche lsolierverfahren unter Verwendung einer Umwicklung mit verschiedensten Bändern erfordern. Damit könnte auf die Verwendung teuerer Spezialgeräte, wie beispielsweise von Wickelrobotern, Vakuum-Druck-Behältern, Einrichtungen zur gekühlten Flüssigharz-Speicherung, wegfallen. Sie würden durch handelsübliche Beschichtungsgeräte und handelsübliche Roboter ersetzt.

Auch wären dieses herkömmliche Sprühsinter-Verfahren in weitaus grösserem Masse automatisierbar als das herkömmliche Verfahren. Die Durchlaufzeiten würden anstatt mehrerer Tage nur noch 0,5 bis 3 Stunden betragen. Die Einsparung an Investitionsgütern würde dazu führen, dass sowohl niedriger Durchlaufzeiten als auch niedriger Herstellungskosten erreicht werden könnten.

Als problematisch erweist sich jedoch, dass herkömmlich die Technik des Sprühsinterns bzw. des elektrostatischen Sprühens derzeit meist nur zum Zweck der Trockenlackierung der verschiedensten Bauteile, beispielsweise von Kühlschränken, Autos, Gartenmöbeln, etc. mit sehr geringen Schichtdikken von ca. 80 µm eingesetzt wird. Auf dem Gebiet der Elektrotechnik findet diese Technik bisher lediglich bei der Isolierung von Sammelschienen im Mittel- und Hochspannungsbereich Anwendung. Wie vorstehend bereits erwähnt dient die oben angeführte Isolierung jedoch lediglich zur Isolierung von Teilleitern, bei denen nur geringe Potentialunterschiede auftreten.

Bei dieser herkömmlichen Anwendung auf dem Gebiet der Isoliertechnik für Sammelschienen wird jedoch im Gegensatz zu der durch das erfindungsgemässe Verfahren herzustellenden hochwertigen Isolierung die Isolierung elektrisch nur schwach belastet, da die Erdelektrode auf der Isolierung fehlt und somit die Spannung grösstenteils über die umgebende Luft abgebaut wird. Wegen der daher wesentlich geringeren elektrischen Belastung bestehen hinsichtlich Isolierdicke und Fehlerfreiheit im Stand der Technik wesentlich geringere Anforderungen als bei dem erfindungsgemässen Verfahren und daher sind dort Fehlstellen akzeptabel, da keine Teilentladungen drohen. Üblicherweise wird ein Pulver auf Epoxidharzbasis verwendet, das in der derzeitigen Zusammensetzung jedoch aufgrund hoher dielektrischer Verluste nicht oberhalb von T = 130° einsetzbar ist. Zudem zeigen Probebeschichtungen mit diesem Pulver massenhaft Poren.
Gemäss eines weiteren aus US-A-3 747 853 bekannten Verfahrens wird ein pulverförmige Harzmaterial auf die Spulen einer elektrischen Maschine aufgebrauht. Daher sind im Vergleich zum bekannten Stand der Technik des Sprühsinterns beim erfindungsgemässen Verfahren zur Herstellung einer hochwertigen Isolierung von Leitern bzw. Leiterbündeln zahlreiche Modifikationen erforderlich, um bisher unberücksichtigte Probleme zu lösen bzw. für dieses Verfahren bei der herkömmlichen Anwendung vorteilhafte Eigenschaften, die jedoch bei der Erreichung der erfindungsgemässen Ziele hinderlich sind, zu beseitigen.

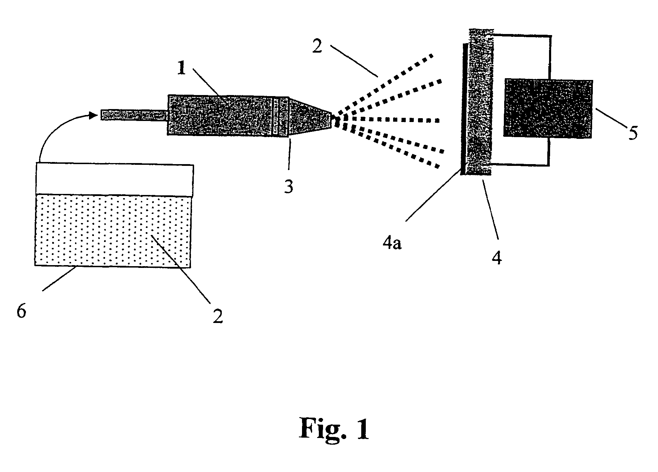

In Fig. 1 ist eine Vorrichtung zur Durchführung des erfindungsgemässen Verfahrens schematisch gezeigt; der Einfachheit halber sind einige Elemente in Fig. 1 nicht gezeigt, sondern nur genau beschrieben.

Das zentrale Gerät zur Durchführung des erfindungsgemässen Verfahrens ist eine Sprühpistole 1. Dieser Sprühpistole 1 wird Beschichtungsmaterial 2 in pulverisierter Form, beispielsweise thermisch vernetzendes Epoxypulver, aus einem Vorratsbehälter 6 in fluidisierter Form zugeführt. Das Fluidisierungsmedium ist hierbei bevorzugt getrocknete Luft oder Stickstoff. Die Sprühpistole 1 kann eine Einrichtung 3 zur elektrostatischen, d.h. negativen, oder triboelektrischen, d.h. positiven, Aufladung des Beschichtungsmaterials 2, also der Pulverteilchen aufweisen.

Eine elektrische Aufladung des Beschichtungsmaterials 2 ist jedoch für das erfindungsgemässe Verfahren nicht zwingend notwendig. Sie besitzt aber den Vorteil, dass an Spitzen und Kanten eines zu isolierenden Leiters aufgrund der lokalen Überhöhung des elektrischen Feldes ein erhöhter Materialauftrag stattfindet. Dieser lässt sich durch Einstellen der Hochspannung an der Einrichtung 3 beeinflussen. Dies ist häufig erwünscht, da an diesen Stellen auch im Betrieb die Feldstärke überhöht ist und erfahrungsgemäss Isolierungen bevorzugt dort durchbrechen.

Bei dem erfindungsgemässen Verfahren wird die Sprühpistole 1 mit konstantem Abstand, beispielsweise ca. 100 bis 300 mm, konstanter Geschwindigkeit, beispielsweise ca. 50 bis 800 mm/s, und konstantem Pulverausstoss, beispielsweise ca. 30 bis 250g/min, an einem zu beschichtenden erwärmten Substrat 4, beispielsweise einem zu beschichtenden Leiter vorbeigeführt. Die Führung der Sprühpistole 1 erfolgt dabei bevorzugterweise mittels einer automatischen Verfahreinheit, z.B. eines Roboters. Das Substrat wird während des gesamten Beschichtungsprozesses geheizt. Dies ist, da es sich im vorliegenden Beispiel im elektrische Leiter handelt, einfach durch elektrische Heizung zu bewerkstelligen. Die Heizung des Substrats 4 kann nämlich entweder durch ohmsches Heizen durch Gleichstrom oder Niederfrequenz, z.B. bei 50Hz, oder durch induktives Heizen durch Mittelfrequenz oder Hochfrequenz erfolgen. Dazu ist beispielsweise eine Stromquelle 5 ausgebildet. Die Temperatur der zu beschichtenden Substratoberfläche 4a wird dabei so gewählt, dass das Beschichtungsmaterial 2 , beispielsweise das Epoxypulver, beim Auftreffen darauf aufschmilzt und anschliessend thermisch vernetzt, d.h. härtet.

Neben der hier beschriebenen Heizung während der Beschichtung sind auch Methoden denkbar, bei denen das zu beschichtende Objekt vorgewärmt wird (beispielsweise in einem separaten Ofen) und dann auf die Beschichtungsanlage gebracht wird. Aufgrund der hohen Wärmekapazität des Kupfers ist es nun möglich, den Stab bzw. die Spule mit mindestens einem Teil der gesamthaft notwendigen Isolierdicke zu beschichten. Sinkt die Oberflächentemperatur so tief ab, dass das Pulver nicht mehr zu einem glänzenden Film aufschmilzt, sondern als sandartiger Belag kleben bleibt, ist eine erneute Wärmezufuhr notwendig. Ein qualitativer Unterschied der fertigen Isolierung zwischen ständigem Heizen während des Beschichtens und abwechselnden Heiz- und Beschichtungszyklen besteht nicht. Sinnvoll ist die Anwendung des Zwischenheizens im Ofen dann, wenn bei Objekten mit sehr grossem Cu-Querschnitt eine resistive Heizung (wegen Schwierigkeiten bei der Stromeinführung; Kontaktwiderstand) oder induktive Heizung (HF-Quellen im 15 bis 10 kA-Bereich sind teuer und müssen kostenaufwendig abgeschirmt werden) schwierig zu realisieren ist.

In einer vorteilhaften Ausführung besteht der "Ofen" aus einer Anlage von IR-Strahlern, welcher über das auf der Beschichtungsanlage montierte Objekt gezogen bzw. gefahren bzw. gestülpt wird.

Die Beschichtung erfolgt beim erfindungsgemässe Verfahren lagenweise, bis die Solldicke der Isolierung erreicht ist, im Unterschied zum Stand der Technik, in dem die Beschichtung in einem einzelnen Durchgang erfolgt. Eine Lage bei diesem Verfahren entspricht der Isolierschicht, die durch einen Sprühdurchgang erzielt wird. Nach einem Sprühdurchgang muss hierbei dem Beschichtungsmaterial genügend Zeit gegeben werden, um aufzuschmelzen, zu verlaufen und soweit zu vernetzen, dass es nicht mehr fliesst. Daher ist die im folgenden noch zu erläuternde Gelzeit sehr wichtig.

Prinzipiell ist es durchaus möglich, mit einem Sprühdurchgang Lagen von 1 mm Dicke und mehr aufzubauen. Untersuchungen haben jedoch ergeben, dass bei Lagendicken grösser als 0,2 mm die Anzahl von Blasen, d.h. Fehlstellen, in der Isolierung deutlich ansteigt, die jedoch bisher im Anwendungsbereich der Technik des Sprühsinterns keinerlei Problem darstellten. Der Grund für die Blasenbildung bei Lagendicken > 0,2 mm besteht darin, dass adsorbierte Stoffe und Verunreinigungen mit niedrigem Dampfdruck bei höheren Lagendicken nicht mehr die Möglichkeit haben, frei abzudampfen. Diese Blasenbildung verursachte bei den herkömmlichen Anwendungen wenig Probleme, stellt jedoch für die erfindungsgemässe Isolierung einen Nachteil dar, der gerade durch das erfindungsgemässe Verfahren vermieden werden soll. Daher wird bei dem erfindungsgemässen Verfahren die Isolierung in aufeinanderfolgenden Schritten in Lagendicken von bis zu 0,2 mm aufgebracht, so dass die gewünschte Freiheit von Fehlstellen erzielt werden kann.

Durch die vorstehend bereits erwähnte Konstanz in Sprühabstand, Sprühpistolen-Bewegungsgeschwindigkeit und Beschichtungsmaterial- bzw. Pulverausstoss wird eine Dickenkonstanz von besser als 0,08 mm bei Gesamtdikken von ca. 1 mm erzielt. Da die Geschwindigkeit sehr einfach und kontrolliert änderbar ist, ist das erfindungsgemässe Verfahren in der Lage, lokal die Dikke der Isolierung zu ändern. So ist es beispielsweise möglich, die Isolierdicke auf den Schmalseiten des Roebelstabes gegenüber den Dicken auf den Breitseiten zu erhöhen, was zu einer Verringerung der elektrischen Feldstärke führt, ohne dass die Nutbreite erhöht werden muss oder die Wärmeabfuhr aus dem Stab, die über die Breitseiten erfolgt, zu behindern.

Weiterhin ist es mit dem erfindungsgemässen Verfahren auch möglich, im Bügelbereich von Roebelstäben, in dem die elektrische Feldbelastung generell niedriger ist als im geraden Teil, die Isolierdicke zu verringern. Auch bezüglich Feldabsteuerung ergeben sich durch axiale Variation der Dicke oder Zusammensetzung von leitenden oder halbleitenden Schichten Möglichkeiten, die mit dem herkömmlichen System nicht oder nur schwer realisierbar sind.

Falls die oben erwähnte Dickentoleranz nicht genügt oder eine komplizierte Schichtdickenverteilung erwünscht ist, kann zusätzlich durch berührungslose Messung der aktuellen Schichtdicke an einem gegebenen Ort x,y,z mittels Infrarot und durch eine geeignete Rückmeldung an das Steuersystem des Roboters die Fahrgeschwindigkeit der Sprühpistole derart angepasst werden, dass die endgültige Dicke am Ort x,y,z dem Sollwert entspricht.

Als Materialien für die Isolierung sind prinzipiell alle thermisch vernetzbaren Kunststoffe, sogenannte Thermosets einsetzbar. Die bei der vorliegenden Anwendung geforderte thermische Eignung der Isolierung bis 180°C wird am besten durch Epoxyde erfüllt. Diese Materialien bestehen aus einer Mischung aus mindestens einem nichtvernetzten Harz und mindestens einem Härter (plus einige weitere Zusätze wie Beschleuniger, Pigmente usw.) sowie aus anorganischen Füllstoffen. Die Mischung ist bis mindestens 50°C fest. Je nach chemischer Zusammensetzung von Harz und Härter variieren Schmelz-und Härtungstemperaturen sowie die Glasübergangstemperatur T_{g}. Der Temperaturverlauf der mechanischen und dielektrischen Festigkeit ist eng mit der Glasübergangstemperatur T_{g} verknüpft. Wird eine Einsetzbarkeit der Isolierung bei Wärmeklasse H gewünscht, sollte T_{g} in diesem Bereich liegen, bevorzugt zwischen 150°C und 200°C. Glasübergangstemperaturen deutlich höher als 200°C sind einerseits schwer zu realisieren und führen andererseits zu einem Material, das im Bereich der Raumtemperatur recht spröde ist.

Die oben erwähnte, erwünschte Blasenfreiheit ist nicht nur abhängig von Prozessparametern, wie der Auftragsdicke, sondern auch von Materialeigenschaften.

Wichtig ist, dass das Epoxy im flüssigen Zustand eine hinreichend niedrige Viskosität hat, um gut zu verlaufen, und dass die Gelzeit lang genug ist, dass alle blasenbildenden Verunreinigungen verdampft sind. Diese Forderung nach langen Gelzeiten ist dem herkömmlichen Trend der Pulverlackierer, die bisher die Technik des Sprühsinterns anwenden, entgegengesetzt, die zur Erzielung hoher Durchlaufzeiten beim Dünnschicht-Lackieren die Gelzeiten durch Zugabe von Beschleunigern gezielt niedrig einstellen, beispielsweise typischerweise auf 15s. Durch Verringerung des Beschleunigeranteils lassen sich jedoch die Gelzeiten handelsüblicher Pulver ohne Schwierigkeiten auf Zeiten ≥ 40s bringen, die für die vorliegende Anwendung ausreichend lang sind.

Die Viskosität wird bei Sprühpulvern meist nicht als separate Grösse gemessen und spezifiziert; stattdessen wird der sogenannte Ablauf, der sich aus Viskosität und Gelzeit ergibt, spezifiziert. Blasenfreie Schichten werden erzielt, wenn der Ablauf > 30 mm ist.

Eine Füllung mit anorganischen Füllstoffen ist prinzipiell wünschenswert zur Preisreduktion, Verbesserung der Kriechbeständigkeit, zur Verringerung des thermischen Ausdehnungskoeffizienten und zur Verbesserung der Wärmeleitung der Isolierung. Der Füllstoffanteil an der Gesamtmischung sollte 5 - 50 Gewichtsprozent betragen, bezogen auf eine geschlossene Dichte der Füllstoffe von bis zu 4 g/cm³. Gebräuchliche Füllmittel sind beispielsweise Quarzmehl, Wollastonit, Talk und Kreidemehl mit Korngrössen um 10 µm (mittlere Korngrösse d₅₀). Zur Herstellung eines Sprühpulvers wird der Füller zusammen mit Harz, Härter und weiteren Zusatzstoffen gemischt und kompoundiert. Das kompoundierte Produkt wird anschliessend zu Pulver zermahlen.

Diese Mahlprozesse werden üblicherweise in Geräten aus Stahl oder Hartmetall (Mohs'scher Härtegrad 5 bis 6) durchgeführt. Die Verwendung harter Füllstoffe, z.B. Quarzmehl (Härtegrad 7), führt zu metallischem Abrieb, bevorzugt in Form von Spänen im sub-mm Bereich. Diese werden in die Isolierung eingebaut und führen aufgrund ihrer nadelähnlichen Geometrie zu Stellen mit einer lokal sehr stark überhöhten elektrischen Feldstärke, von denen erfahrungsgemäss ein elektrischer Durchschlag erfolgen kann. Vermieden wird der Abrieb durch Verwendung von "weichen" Füllern (Mohs'scher Härtegrad ≤ 4), z.B. Kreidemehl und/oder Verwendung von feineren Füllstoffen mit d₅₀<<1 µm, z.B. Ton, SiO₂, ZnO oder TiO₂.

Derartige Feinfüller haben darüber hinaus den Vorteil, dass sie selbst bei Vorliegen von Fehlstellen wie Hohlräumen oder metallischen Einschlüssen den elektrischen Durchbruch verhindern oder zumindest sehr stark verzögern, wie beispielsweise im US-Patent Nr. 4 760 296 von Johnston et al. oder in der deutschen Patentanmeldung DE 4037 972 A1 offenbart. In diesen beiden Veröffentlichungen wird die Lebensdauer-erhöhende Wirkung durch gänzliches oder teilweises Ersetzen des Grobfüllers durch Füller mit Korngrössen im Nanometer-Bereich (0,005 bis 0,1 µm maximale Korngrösse) erzielt. Nano-füller haben jedoch die unangenehme Begleiteigenschaft, die Schmelzezähigkeit der Pulvermischung stark zu erhöhen, der sogenannte Tixotropie-Effekt. Dies stört sowohl bei der Herstellung des Pulvers als auch bei seiner Verarbeitung. Dennoch stellen Nano-Füller aber eine brauchbare Alternative zur Lebensdauer-Erhöhung dar. Für die erfindungsgemässe Anwendung hat sich jedoch auch gezeigt, dass eine alternative Verwendung von TiO₂-Pulver mit mittleren Korngrössen von ca. 0,2 µm als vollständiger oder teilweiser Ersatz für Grobfüller nicht zu einer nachteiligen Erhöhung der Schmelzeviskosität führt und trotzdem ebenfalls die Lebenszeit-erhöhenden Wirkungen in der Art von Nano-Füllern besitzt. Der Anteil von TiO₂-Pulver an der Gesamtmischung sollte dabei mindestens 3%, vorzugsweise mindestens 5% betragen.

Leitfähige Schichten, die für Innenglimmschutz und Aussenglimmschutz eingesetzt werden, lassen sich durch Verwendung von leitenden Füllstoffen, wie beispielsweise Graphit, Russ und/oder Metallpulver, herstellen.

Im folgenden wird nun basierend auf den vorstehenden grundlegenden Erläuterungen der Materialien sowie der Vorrichtung der Verfahrensablauf bei der erfindungsgemässen neuartigen Isolierung von elektrischen Leitern beschrieben.

Das Verfahren umfasst die folgenden Schritte:

### 1) Montage des zu beschichtenden Stabs bzw. der Spule auf einer Drehvorrichtung

In einem ersten Schritt S1 wird ein zu beschichtender Stab bzw. eine zu beschichtende Spule auf einer Drehvorrichtung montiert. Hierbei sind die Stabenden bzw. Spulenaugen die Halterungspunkte. Vorteilhafterweise ist der Stab bzw. die Spule durch innere Verklebungen der Leiter oder Umwicklung mit einem Band vorverfestigt, da dies die Handhabung erleichtert, jedoch ist dies keine zwingende Voraussetzung. Bei grösseren Objekten sind Zwischenabstützungen sinnvoll, um eine sichere Befestigung auf der Drehvorrichtung sowie eine genaue Positionierung zu gewährleisten. Die Drehvorrichtung mit dem darauf montierten Stab oder der Spule wird mittels einer Steuereinrichtung angesteuert, die vorteilhafterweise in der Steuerung einer Sprüheinrichtung enthalten ist.

### 2) Heizen der Stabs bzw. der Spule

Im zweiten Schritt S2 wird der Stab bzw. die Spule an eine elektrische Heizung angeschlossen. Diese elektrische Heizung kann beispielsweise eine ohmsche Heizung durch Gleichstrom oder Niederfrequenz, z.B. 50 Hz, sein, oder eine induktive Heizung durch Mittelfrequenz oder Hochfrequenz. Mittels dieser Heizung wird der Stab bzw. die Spule auf eine gewünschte Substrattemperatur erwärmt.

### 3) Ausrichten der Stab- bzw. Spulenposition zur Sprühpistole

Im folgenden dritten Schritt S3 erfolgt ein Ausrichten der Stab- bzw. SpulenPosition für einen Beginn des Sprühens. Dabei wird eine der Flachseiten des Stabes bzw. der Spule senkrecht zur Sprühpistole ausgerichtet.

### 4) Sprühen eines Innenglimmschutzes auf den Stab bzw. die Spule

Anschliessend erfolgt als vierter Schritt S4 und somit erster eigentlicher Beschichtungsschritt ein Sprühen eines Innenglimmschutzes in horizontalen Bahnen. Die Bewegung der Sprühpistole erfolgt derart, dass ein homogenes Schichtdickenprofil erzeugt wird. Hierzu kann es notwendig sein, bei sehr breiten Stäben mehrere überlappende Bahnen parallel zu spritzen. Dabei wird als aufgesprühtes Beschichtungspulver ein leitfähiges oder halbleitfähiges Thermoset verwendet. Um das Besprühen zu beschleunigen, können bei grossen Objekten mehrere Sprühpistolen gleichzeitig eingesetzt werden. Die bei grösseren Objekten zur Positionsstabilisierung verwendeten Zwischenabstützungen fahren beim Herannahen der Sprühpistole automatisch weg, um eine vollständige Beschichtung des Stabs bzw. der Spule zu ermöglichen. Über die Fördermenge des Beschichtungspulvers sowie die Fahrgeschwindigkeit der Sprühpistole kann in einfacher Weise die auf den Stab bzw. die Spule aufgebrachte Schichtdicke variiert werden. In der Regel beträgt die Schichtdicke ≤ 0,2 mm pro Durchgang, um die Blasenfreiheit der jeweiligen Schicht sicherzustellen.

### 5) Drehen des Stabs bzw. der Spule und Wiederholen der Schritte S3 und S4

Als darauf folgender fünfter Schritt S5 erfolgt nach Beendigung der Beschichtung einer Flachseite eine Drehung des Stabes bzw. der Spule, so dass eine weitere, noch nicht beschichtete Stab- bzw. Spulenseite der Sprühpistole zugewandt ist. Danach werden der dritte und der vierte Schritt S3 und S4 zur Beschichtung der nächsten Stab- bzw. Spulenseite wiederholt. Ebenso werden der fünfte, dritte und vierte Schritt S3, S4 und S5 auch noch für alle weiteren Seiten des Stabes bzw. der Spule wiederholt, bis der Stab bzw. die Spule vollständig beschichtet ist. Bei Spulen erfolgt zudem noch eine Wiederholung für den anderen Spulenschenkel.

In der Regel wird die für den Innenglimmschutz erforderliche Dicke in einem einmaligen Durchgang aufgetragen; in der Ausnahme können aber auch mehrere Beschichtungsdurchgänge durchgeführt werden, falls eine höhere Schichtdicke als 0,2 mm gewünscht ist.

### 6) Aushärten des Innenglimmschutzes

Anschliessend wird als Schritt S6 diese Innenglimmschutzschicht teilweise oder vollständig, d.h. über einen Zeitraum zwischen 2 bis 10 min. bzw. 20 bis 60 min. bei 200°C ausgehärtet.

### 7) Aufbringen der Isolierschicht entsprechend den Schritten S3 bis S6

Anschliessend wird in einem siebenten Schritt S7 die eigentliche Isolierschicht aufgebracht. Dabei wird ein anderes Beschichtungspulver verwendet als bei dem Innenglimmschutz, nämlich ein isolierend gefülltes oder ungefülltes Thermoset.

Wiederum werden die vorstehend beschriebenen dritten, vierten und fünften Schritte im Unterschied zu den vorstehend beschriebenen Schritten nur mit dem isolierenden Beschichtungspulver durchgeführt, wobei Lagen von < 0,2 mm wiederholt aufgebracht werden, bis eine gewünschte Isolierdicke erreicht ist. Hierbei erfolgt nach dem Sprühen jeder Lage eine Zwischenhärtung, die 2 bis 10mal die Gelzeit des Pulvers dauert. Zusätzlich muss, um ein zuverlässiges Aufschmelzen des Beschichtungspulvers sicherzustellen, beachtet werden, dass eventuell mit steigender Schichtdicke die Substrattemperatur nachgeregelt werden muss. Dies wird bevorzugt berührungslos, z.B. mittels eines IR-Pyrometers geschehen. Um eine Überhitzung der Leiterelemente und deren Isolierung zu vermeiden, kann die Überwachung des temperaturabhängigen Widerstandes des Leiters verwendet werden.

### 8) Aufbringen des Aussenglimmschutzes entsprechend den Schritten S3, S4, S5 und S6

Als anschliessender Schritt, der auf das Aufbringen der Isolierschicht (Schritt S7) folgt, wird ein Aussenglimmschutz aus leitfähigem Epoxy auf die Isolierschicht aufgebracht. Das verwendete Material sowie die Verfahrensschritte entsprechen den im dritten, vierten und fünften Schritt beschriebenen.

### 9) Nachhärten der aufgebrachten Isolierung

Als abschliessender Schritt nach Beendigung der Beschichtungen (Schritte S1 bis S8) erfolgt entweder ein Nachhärten der aufgebrachten Isolierung mit einer Stromheizung auf der Haltevorrichtung oder nach dem Ausbau aus der Drehvorrichtung im Ofen.

Da bei diesem erfindungsgemässen Verfahren zur Isolierung die Stäbe an ihren Enden gehaltert sind, werden diese nicht beschichtet. Dies hat jedoch keinerlei Nachteile zur Folge, da die Stabenden zum Auflöten von Rundverbindungen sowieso frei bleiben.

Bei der Spulen wird hingegen der Bereich im Spulenauge absichtlich nicht beschichtet. Auf diese Weise wird nämlich die für den Einbau nötige Verformbarkeit der Spulen bewahrt. Eine Isolierung der Spulenaugen erfolgt dann erst im eingebauten Zustand nach der Montage.

Für diesen Isoliervorgang der Spulenaugen bieten sich dabei die folgenden Verfahren an:
1) Entweder wird der Motorstator senkrecht gestellt und die Spulen werden elektrisch geheizt. Dann werden die Spulenaugen des unteren Spulenendes durch Eintauchen der Spulenenden in ein Wirbelsinterbecken mit Thermoset-Pulver beschichtet. Dann wird der Stator um 180° gedreht und die Spulenaugen des anderen Statorendes werden auf dieselbe Weise, wie vorstehend beschrieben, beschichtet. Vor allen eignet sich dieses Verfahren zum Beschichten kleinerer Statoren.
2) Alternativ wird die Motorwicklung resistiv geheizt und die Endpartien der Spulen werden durch Sprühsintern isoliert. Dieses Verfahren wird mit Vorteil bei grösseren Motoren eingesetzt, bei denen das Gesamtgewicht des Stators hoch ist und das Senkrecht-Hängen ein Problem werden kann. Auch sind bei grossen Maschinen die Abstände zwischen den Spulen meist grösser, so dass die Beschichtung mit einer Sprühpistole somit einfacher wird.

In einer alternativen Ausführungsform des erfindungsgemässen Verfahrens kann das Aufsprühen eines Innenglimmschutzes, wie es in den vorhergehenden Schritten 3) bis 5) beschrieben ist, entfallen, falls für die Vorverfestigung des Stabs bzw. der Spule ein Band verwendet wurde, das mit einer leitfähigen oder halbleitfähigen Schicht versehen ist und somit gleichzeitig mit der Vorverfestigung einen Innenglimmschutz bildet.

Zusammenfassend offenbart die Erfindung ein Verfahren zur Herstellung einer hochwertigen Isolierung von Leitern oder Leiterbündeln elektrischer Maschinen mittels Sprühsintern. Im Gegensatz zum Stand der Technik ist es möglich, Innenglimmschutz, Isolierung und Aussenglimmschutz auf Leitern oder Leiterbündeln aufzubringen, bei denen aufgrund fehlender Fehlstellen keine Teilentladungen auftreten, ohne dazu aufwendige Spezialgeräte erforderlich sind, wie bei der bisher verwendeten Isolierung mit Glimmer.

Somit bietet die Erfindung ein einfaches, kostengünstiges Verfahren zur Isolierung von Leiterstäben bzw. Spulen mit einer qualitativ hochwertigen Isolierung, die Fehlstellen-frei und somit teilentladungsfrei ist.

Zusammenfassend offenbart die vorliegende Erfindung ein Verfahren zur Herstellung einer hochwertigen Isolierung von Leitern oder Leiterbündeln elektrischer Maschinen mittels Sprühsintern. Im Gegensatz zum Stand der Technik ist es möglich, Innenglimmschutz, Isolierung und Aussenglimmschutz auf Leitern oder Leiterbündeln aufzubringen, bei denen aufgrund eines sehr geringen Fehstellengehaltes der Isolierung und ihrer härenten Resistenz gegen Teilentladungen auf die Verwendung von Wickelverfahren mit Glas/Glimmerbändern verzichtet werden kann. Dadurch entfällt die Verwendung aufwendiger Spezialgeräte und es werden wesentliche Verkürzungen bei den Durchlaufzeiten möglich.

## Patentansprüche

1. Verfahren zur Herstellung einer hochwertigen Isolierung für Leiter oder Leiterbundel rotierender elektrischer Maschinen, mit den Schritten:
- S1) Montage eines zu beschichtenden Leiters oder Leiterbündels auf einer Dreh- und Haltevorrichtung,
- S2) Heizen des Leiters oder Leiterbündels auf eine vorbestimmte Substrattemperatur,
- S3) - S8) Aufbringen einer mehrschichtigen Isolierung mit einem gewünschten Schichtdickenprofil in mehreren Durchgängen mittels einer auf einer einstellbaren Verfahreinheit angeordneten Sprühpistole, wobei bei dem jeweiligen Durchgang entweder eine kombinierte Bewegung von Sprühpistole und Leiter oder Leiterbündel mittels der Verfahreinheit sowie der Dreh- und Haltevorrichtung oder eine alleinige Bewegung der Sprühpistole mittels der Verfahreinheit erfogt, und der Sprühabstand, die Sprühpistole/Leiter oder Leiterbündel Bewegungsschwindigkeit und Fördermenge des Beschichtungspulvers so gewählt werden, dass die Schichtdicke der jeweiligen Schicht kleiner gleich 0,2 mm pro Durchgang beträgt, und
- S9) Nachhärten der aufgebrachten Schichten.

2. Verfahren nach Anspruch 1, wobei die Schritte S3) - S8) umfassen:
- S3) Ausrichten der Leiter oder Leiterbündel-Position zur Sprühpistole derart, dass eine der Flachseiten der Sprühpistole zugewandt ist,
- S4) Sprühen eines Innenglimmschutzes auf den zu beschichtenden Leiter bzw. das Leiterbündel,
- S5) Drehen des Leiters oder Leiterbündels derart, dass eine weitere Flachseite der Sprühpistole zugewandt ist und Wiederholen der Schritte S3) und S4), bis alle Flachseiten des Leiters oder Leiterbündels beschichtet sind,
- S6) teilweises oder vollsbändiges Aushärten der aufgebrachten Innenglimmschutzschicht,
- S7) Aufbringen einer Isolierschicht entsprechend den Schritten S3) bis S6) auf alle Seiten des Leiters oder Leiterbündels mit Zwischenhärten nach jeder Schicht, wobei die Substrattemperatur soweit erforderlich nachgeregelt wird, und
- S8) Aufbringen eines Aussenglimmschutzes entsprechend den Schritten S3) bis S6).

3. Verfahren nach Anspruch 1 oder 2, wobei die Leiter oder Leiterbündel ein Roebelstab oder eine Spule sind.

4. Verfahren nach Anspruch 1, 2 oder 3, mit dem weiteren Schritt S0) Vorverfestigen des Leiters bzw. der Leiterbündel durch innere Verklebungen oder Umwicklung mit einem Band.

5. Verfahren nach Anspruch 3, wobei
Schritt S1) ein Haltern des Stabs an den Stabenden oder der Spule an den Spulenaugen umfasst.

6. Verfahren nach einem der vorangehenden Ansprüche 1 bis 5, wobei in Schritt S1) grössere Objekte durch zusätzliche Zwischenabstützungen gehalten werden, um eine genaue Positionierung zu gewährleisten.

7. Verfahren nach einem der vorangehenden Ansprüche 1 bis 6, wobei der Leiter bzw. das Leiterbündel elektrisch geheizt wird durch eine Ohm'sche Heizung unter Verwendung von Gleichstrom oder Niederfrequenz oder durch eine induktive Heizung unter Verwendung von Mittelfrequenz oder Hochfrequenz.

8. Verfahren nach einem der Ansprüche 2 bis 6, wobei anstelle dem Heizen gemäss S2) ein Heizen des Leiters oder Leiterbündels vor oder nach der Montage auf der Dreh- und Halteeinrichtung mittels Bestrahlung erfolgt und ein Nachheizen immer dann erfolgt, wenn die Substrattemperatur unter eine vorbestimmte Substrattemperatur abfällt.

9. Verfahren nach einem der vorangehenden Ansprüche 2 bis 8, wobei die Schritte S4), S7) und S8) bei breiten Leitern oder Leiterbündeln durch Sprühen in mehrfachen parallelen Bahnen durch mehere Sprühpistolen ausgefürt werden.

10. Verfahren nach einem der vorangehenden Ansprüche 2 bis 9, wobei in Schritt S4) als Beschichtungspulver leitfähig oder halbleitfähig gefüllter, thermisch vernetzender Kunststoff verwendet wird.

11. Verfahren nach Anspruch 6, wobei in Schritt S4) die Zwischenabstützungen beim Herannahen der Sprühpistole automatisch wegfahren.

12. Verfahren nach einem der vorangehenden Ansprüche, mit dem weiteren Schritt
Variieren der Schichtdicke, indem die Fördermenge des Beschichtungspulvers sowie die Fahrgeschwindigkeit der Sprühpistole gesteuert wird.

13. Verfahren nach Anspruch 3, wobei
bei Vorliegen einer Spule Schritt S5) auf für den anderen Spulenschenkel wiederholt wird.

14. Verfahren nach einem der vorangehenden Ansprüche 2 bis 13, wobei
in Schritt S7) als Beschichtungspulver ein isolierend gefüllter thermisch vernetzender Kunststoff verwendet wird.

15. Verfahren nach einem der vorangehenden Ansprüche 2 bis 14, wobei
in Schritt S8) als Beschichtungspulver ein leitfähiger thermisch vernetzender Kunststoff verwendet wird.

16. Verfahren nach einem der vorangehenden Ansprüche 1 bis 15, wobei
in Schritt S9) das Nachhärten mittels einer Stromheizung erfolgt, der Leiter anschliessend auskühlen gelassen und dann aus der Drehvorrichtung ausgebaut wird oder der Leiter direkt aus der Drehvorrichtung ausgebaut und in einem Ofen nachgehärtet wird.

17. Verfahren nach Anspruch 4, wobei
die Schritte S3) bis S6) zum Aufbringen des Innenglimmschutzes ersatzlos wegfallen, wenn in Schritt S0) ein Band verwendet wird, das mit einer leitfähigen oder halbleitfähigen Schicht versehen ist und gleichzeitig mit der Verfestigung einen Innenglimmschutz bildet.

18. Verfahren nach einem der vorangehenden Ansprüche 2 bis 18, wobei Schritt S4) ein Aufladen des Beschichtungsmaterials vor dem Aufbringen auf die Leiteroberfläche umfasst, wobei dieses Aufladen elektrostatisch oder triboelektrisch sein kann, so dass an Kanten eine dickere Beschichtung erfolgt.

19. Verfahren nach einem der vorangehenden Ansprüche 2 bis 18, wobei in den Schritten S3) bis S8) auf die verschiedenen Leiter- bzw. Leiterbündel-Seiten verschiedene Schichtdicken aufbringbar sind.

20. Verfahren nach Anspruch 3, mit dem weiteren Schritt
S10) im Falle einer Spule nach dem Einbau der Spule Senkrechtstellen des Motorstators, elektrisch Heizen der Spule und Eintauchen der Spulenaugen in ein Wirbelsinterbecken zum Beschichten mit Epoxy jeweils für beide Spulenseiten oder
im Falle eines Stabs resisitives Heizen der Motorwicklung und Isolieren der Endpartien durch Sprühsintern für beide Stabenden.

21. Verfahren nach einem der vorangehenden Ansprüche 2 bis 20, wobei
in Schritt S7) die Oberflächentemperatur berührungslos überwacht wird und entsprechend einer Abweichung der erfassten Oberflächentemperatur von einer gewünschten Oberflächentemperatur die Substrattemperatur nachgeregelt wird.

22. Verfahren nach einem der Ansprüche 10, 14 oder 15, wobei
der thermisch vernetzende Kunststoff ein Epoxidharz im B-Zustand ist.

## Claims

1. Process for producing a high-quality insulation for conductors or conductor bundles of rotating electrical machines, comprising the steps of:
- S1) mounting a conductor or conductor bundle which is to be coated on a rotation and holding device,
- S2) heating the conductor or conductor bundle to a predetermined substrate temperature,
- S3 - S8) applying a multilayered insulation with a desired layer thickness profile in several passes by means of a spray gun arranged on an adjustable displacement unit, and during the respective pass either a combined movement of spray gun and conductor or conductor bundle is effected by means of the displacement unit and the rotation and holding device, or a movement of the spray gun alone is effected by means of the displacement unit, and the spraying distance, the spray gun/conductor or conductor bundle speed of movement and delivery quantity of the coating powder are chosen in such a way that the layer thickness of the respective layer is less than 0.2 mm per pass, and
- S9) post-curing the layers which have been applied.

2. Process according to Claim 1, in which the steps S3)-S8) comprise:
- S3) orienting the conductors or conductor bundle position with respect to the spray gun in such a manner that one of the flat sides faces the spray gun,
- S4) spraying an internal corona-discharge protection onto the conductor bundle or conductor which is to be coated,
- S5) rotating the conductor or conductor bundle in such a manner that a further flat side faces the spray gun, and repeating steps S3) and S4) until all the flat sides of the conductor or conductor bundle have been coated,
- S6) partially or completely curing the internal corona-discharge protection which has been applied,
- S7) applying an insulating layer in accordance with steps S3) to S6) to all sides of the conductor or conductor bundle, carrying out intermediate curing after each layer, the substrate temperature being adjusted if necessary, and
- S8) applying an external corona-discharge protection in accordance with steps S3) to S6).

3. Process according to Claim 1 or 2, in which the conductors or conductor bundles are a transposed bar or a coil.

4. Process according to Claim 1, 2 or 3, comprising the further step of
S0) prestrengthening the conductor or conductor bundle by internal adhesive bonding or by winding a tape around it.

5. Process according to Claim 3, in which step S1) comprises holding the bar at the bar ends or the coil at the coil eyelets.

6. Process according to one of the preceding Claims 1 to 5, in which in step S1) relatively large objects are held by additional intermediate supports, in order to ensure accurate positioning.

7. Process according to one of the preceding Claims 1 to 6, in which the conductor or the conductor bundle is electrically heated by resistance heating using direct current or low frequency or by inductive heating using medium frequency or high frequency.

8. Process according to one of Claims 2 to 6, in which instead of the heating in accordance with S2) heating of the conductor or conductor bundle takes place before or after mounting on the rotation and holding device, by means of irradiation, and subsequent heating takes place whenever the substrate temperature drops below a predetermined substrate temperature.

9. Process according to one of the preceding Claims 2 to 8, in which steps S4), S7) and S8), in the case of wide conductors or conductor bundles, are carried out by spraying in a plurality of parallel paths by means of a plurality of spray guns.

10. Process according to one of the preceding Claims 2 to 9, in which in step S4) conductively or semiconductively filled, thermally crosslinking plastic is used as coating powder.

11. Process according to Claim 6, in which in step S4) the intermediate supports automatically move away when the spray gun approaches.

12. Process according to one of the preceding claims, comprising the further step of
varying the layer thickness by controlling the delivery quantity of the coating powder and the rate of movement of the spray gun.

13. Process according to Claim 3, in which, when a coil is present, step S5) is repeated for the other side of the coil.

14. Process according to one of the preceding Claims 2 to 13, in which in step S7) an insulant-filled, thermally crosslinking plastic is used as coating powder.

15. Process according to one of the preceding Claims 2 to 14, in which in step S8) a conductive, thermally crosslinking plastic is used as coating powder.

16. Process according to one of the preceding Claims 1 to 15, in which in step S9) the post-curing takes place by means of current heating, subsequently the conductor is allowed to cool and is then removed from the rotation device, or the conductor is immediately removed from the rotation device and is post-cured in a furnace.

17. Process according to Claim 4, in which the steps S3) to S6) for application of the internal corona-discharge protection are dispensed with without replacement if, in step S0), a tape which is provided with a conductive or semiconducting layer and forms internal corona-discharge protection at the same time as the strengthening is used.

18. Process according to one of the preceding Claims 2 to 18, in which step S4) comprises charging the coating material before it is applied to the conductor surface, in which case this charging may be electrostatic or triboelectric, so that thicker coating takes place at edges.

19. Process according to one of the preceding Claims 2 to 18, in which in steps S3) to S8) different layer thicknesses can be applied to the different conductor or conductor bundle sides.

20. Process according to Claim 3, comprising the further step of
S10) in the case of a coil, after installation of the coil, positioning the motor stator vertically, electrically heating the coil and immersing the coil eyelets in a fluidized-bed sintering tank for coating with epoxy, in each case for both coil sides, or in the case of a bar, resistively heating the motor winding and insulating the end parts by spray-sintering for both bar ends.

21. Process according to one of the preceding Claims 2 to 20, in which in step S7) the surface temperature is monitored without contact and the substrate temperature is readjusted according to a deviation in the recorded surface temperature from a desired surface temperature.

22. Process according to one of Claims 10, 14 or 15,
in which the thermally crosslinking plastic is an epoxy resin in the B state.

## Revendications

1. Procédé de fabrication d'une isolation de haute qualité pour des conducteurs ou des faisceaux de conducteurs de machines électriques tournantes, qui comportent les étapes qui consistent à :
- S1) monter un conducteur ou un faisceau de conducteurs à revêtir sur un dispositif rotatif et de maintien,
- S2) chauffer le matériau de conducteur ou du faisceau de conducteur à une température prédéterminée,
- S3) à S8) appliquer une isolation en plusieurs couches qui présentent un profil d'épaisseur souhaité, en plusieurs passes, au moyen d'un pistolet de pulvérisation disposé sur une unité de déplacement réglable, un déplacement combiné des pistolets de pulvérisation, des conducteurs ou des faisceaux de conducteurs ainsi que du dispositif rotatif et de maintien ayant lieu lors de chaque passe au moyen d'une unité de déplacement, ou au moyen uniquement d'un déplacement des pistolets de pulvérisation au moyen de l'unité de déplacement, la distance de pulvérisation, la vitesse du déplacement des pistolets de pulvérisation, des conducteurs et/ou des faisceaux de conducteurs et le débit d'alimentation de la poudre de revêtement étant sélectionnés de telle sorte que l'épaisseur de chaque couche soit inférieure ou égale à 0,2 mm par passe, et
- S9) durcir les couches qui ont été appliquées.

2. Procédé selon la revendication 1, dans lequel les étapes S3) à S8) comprennent les opérations qui consistent à :
- S3) orienter la position des conducteurs ou des faisceaux de conducteurs par rapport au pistolet de pulvérisation de telle sorte que l'un des côtés plats soit tourné vers le pistolet de pulvérisation,
- S4) pulvériser une protection intérieure anti-effluves sur le conducteur ou le faisceau de conducteurs à revêtir,
- S5) faire tourner le conducteur ou le faisceau de conducteurs de telle sorte qu'un autre de ses côtés plats soit tourné vers le pistolet de pulvérisation et répéter les étapes S3) et S4), jusqu'à ce que tous les côtés plats du conducteur ou du faisceau de conducteurs soient revêtus,
- S6) durcir partiellement ou complètement la couche intérieure de protection anti-effluves qui a été appliquée,
- S7) appliquer une couche isolante d'une manière qui correspond aux étapes S3) à S6) sur tous les côtés du conducteur ou du faisceau de conducteurs, avec durcissement intermédiaire après l'application de chaque couche, la température du support étant régulée dans la mesure nécessaire et
- S8) appliquer une protection extérieure anti-effluves de la même manière que dans les étapes S3) à S6).

3. Procédé selon la revendication 1 ou 2, dans lequel les conducteurs ou faisceaux de conducteurs sont une barre Roebel ou une bobine.

4. Procédé selon les revendications 1, 2, ou 3, avec l'étape supplémentaire S0) de préfixation du conducteur ou du faisceau de conducteurs par collages internes ou emballage à l'aide d'une bande.

5. Procédé selon la revendication 3, dans lequel l'étape S1) comprend le maintien de la barre par les extrémités de la barre ou de la bobine par la lumière de la bobine.

6. Procédé selon l'une des revendications 1 à 5, qui précèdent, dans lequel, on maintient dans l'étape S1) des objets assez grands par des supports intermédiaires supplémentaires, pour assurer leur positionnement précis.

7. Procédé selon l'une des revendications 1 à 6 qui précèdent, dans lequel le conducteur ou le faisceau de conducteurs sont chauffés électriquement à l'aide d'un chauffage ohmique qui recourt à un courant continu ou à un courant à basse fréquence ou à l'aide d'un chauffage par induction qui recourt à un courant à fréquence moyenne ou à haute fréquence.

8. Procédé selon l'une des revendications 2 à 6, dans lequel, au lieu du chauffage selon S2), on réalise un chauffage du conducteur ou du faisceau de conducteurs par irradiation avant ou après le montage sur le dispositif rotatif et de maintien, et on réalise un chauffage supplémentaire chaque fois que la température du substrat est descendue en dessous d'une température prédéterminée du substrat.

9. Procédé selon l'une des revendications 2 à 8 qui précèdent, dans lequel les étapes S4), S7) et S8) sont réalisées en plusieurs bandes parallèles par plusieurs pistolets de pulvérisation sur des conducteurs ou faisceaux conducteurs de grande largeur.

10. Procédé selon l'une des revendications 2 à 9 qui précèdent, dans lequel à l'étape S4), on utilise comme poudre de revêtement une matière synthétique chargée d'une substance conductrice ou semi-conductrice et réticulée thermiquement.

11. Procédé selon la revendication 6, dans lequel dans l'étape S4), les supports intermédiaires sont éloignés automatiquement lorsqu'ils s'approchent du pistolet de pulvérisation.

12. Procédé selon l'une des revendications précédentes, qui comporte l'étape supplémentaire qui consiste à faire varier l'épaisseur de la couche en contrôlant le débit d'alimentation en poudre de revêtement ainsi que la vitesse de déplacement du pistolet de pulvérisation.

13. Procédé selon la revendication 3, dans lequel, dans le cas d'une bobine, l'étape S5) est répétée également pour les autres branches de la bobine.

14. Procédé selon l'une des revendications 2 à 13 qui précèdent, dans lequel, dans l'étape S7), on utilise comme poudre de revêtement une matière synthétique isolante, chargée et réticulable thermiquement.

15. Procédé selon l'une des revendications 2 à 14 qui précèdent, dans lequel à l'étape S8), on utilise comme poudre de revêtement une matière synthétique conductrice réticulable thermiquement.

16. Procédé selon l'une des revendications 1 à 15 qui précèdent, dans lequel à l'étape S9), on réalise le durcissement final au moyen d'un chauffage par courant, on laisse le conducteur se refroidir ensuite et on le démonte ensuite du dispositif rotatif, ou dans lequel le conducteur est démonté directement du dispositif rotatif et reçoit son durcissement final dans un four.

17. Procédé selon la revendication 4, dans lequel les étapes S3) à S6) d'application de la protection antérieure anti-effluves sont supprimées sans être remplacées si, à l'étape S0), on utilise une bande qui est dotée d'une couche conductrice ou semi-conductrice et qui forme en même temps une protection intérieure anti-effluves lors de sa solidification.

18. Procédé selon l'une des revendications 2 à 18 qui précèdent, dans lequel l'étape S4) comprend la charge du matériau de revêtement avant son application sur la surface du conducteur, cette charge pouvant être une charge électrostatique ou triboélectrique, de manière à obtenir un revêtement de plus grande épaisseur sur les arêtes.

19. Procédé selon l'une des revendications 2 à 18 qui précèdent, **caractérisé en ce que** dans les étapes S3) à S8), des couches d'épaisseurs différentes peuvent être appliquées sur des côtés différents des conducteurs ou des faisceaux de conducteurs.

20. Procédé selon la revendication 3, qui comporte l'étape supplémentaire S10) les étapes qui consistent à placer le stator du moteur à la verticale dans le cas d'une bobine et après le montage de la bobine, à chauffer électriquement la bobine et à immerger la lumière de la bobine dans une cuve de frittage à lit fluidisé pour revêtir d'époxy les deux côtés de la bobine, ou, dans le cas d'une barre, à chauffer l'enroulement du moteur par résistance et à isoler les parties d'extrémité de la barre par pulvérisation-frittage.

21. Procédé selon l'une des revendications 2 à 20 qui précèdent, dans lequel à l'étape S7), on surveille sans contact à température de la surface et en cas d'écart entre la température détectée de la surface et une température souhaitée de la surface, la température du substrat est régulée.

22. Procédé selon l'une des revendications 10, 14 ou 15, dans lequel la matière synthétique réticulable thermiquement est une résine époxy à l'état B.
